# EUROPÄISCHE PATENTANMELDUNG

(11) **EP 2 455 416 A2**
(43) Veröffentlichungstag der Anmeldung: **23.05.2012**
(21) Anmeldenummer: 11187521.7
(22) Anmeldetag: 02.11.2011
(51) Int. Cl.: C08G 85/00, C09D 5/16

(54) **Polymerwerkstoff, Verfahren zur in-situ-Funktionalisierung von Polymerwerkstoffen sowie deren Verwendung**

(30) Priorität: 17.11.2010 DE 102010051648
(71) Anmelder: Fraunhofer Gesellschaft zur Förderung der angewandten Wissenschaft E.V., 80686 München (DE)
(72) Erfinder: Burdack-Freitag, Andrea, 83607 Holzkirchen (DE); Schmohl, Andreas, 81247 München (DE); Rampfl, Michael, 83109 Großkarolinenfeld (DE); Breuer, Klaus, 83229 Aschau (DE)
(74) Vertreter: Pfenning, Meinig & Partner GbR

(57) **Zusammenfassung**

Die vorliegende Erfindung betrifft einen Polymerwerkstoff mit funktionalisierter Oberfläche sowie ein Verfahren zur in-situ-Funktionalisierung von Polymerwerkstoffen. Weiterhin umfasst die Erfindung die Verwendung der Polymerwerkstoffe.

## Beschreibung

Die Erfindung betrifft einen Polymerwerkstoff mit funktionalisierter Oberfläche sowie ein Verfahren zur in-situ-Funktionalisierung von Polymerwerkstoffen. Weiterhin umfasst die Erfindung die Verwendung der Polymerwerkstoffe.

Polymerwerkstoffe sind vielfältig eingesetzt. In der WO 2007/133777 A1 werden Polymere mit endständigen Furanonen beschrieben. Ferner umfasst diese Offenlegungsschrift Zusammensetzungen, die diese Polymere enthalten, und die zur Textilherstellung, für medizinische Vorrichtungen, Zuführungs- bzw. Liefermittel, Verpackungsmaterial, Ummantelung für derartige und ähnliche Gegenstände eingesetzt werden.

In der DE 697 22 233 T2 ist eine polyfunktionelle Urethan-enthaltende Zusammensetzung beschrieben, die in einem zweistufigen Verfahren herstellbar ist, sowie Verfahren zur Oberflächenbeschichtung, zur Herstellung stabilisierter Latizes wie auch gehärteter Polymerharze.

In "Synthesis and characterization of fluorocarbon chain end-capped poly(carbonate urethane)s as biomaterials: A novel bilayered surface structure" von X. Xie, H. Tan, J. Li, Y. Zhong, Journal of biomedical materials research. Part A (2008), 84(1), 30-43, wurde gezeigt, dass es eine Oberflächenanreicherung endständig fluorierter Polymere gibt. Weiterhin werden verschiedene Analysen zur Charakterisierung der Oberfläche und des Bulks aufgezeigt.

Die aus dem Stand der Technik bekannten Verfahren sowie Polymerwerkstoffe ermöglichen keinen gerichteten Schichtaufbau. Ferner kann bei den bekannten Verfahren eine Veränderung der Bulk-Eigenschaften erfolgen.

Ausgehend hiervon ist es Aufgabe der vorliegenden Erfindung, die Nachteile des Standes der Technik zu beseitigen und Polymerwerkstoffe sowie Verfahren zu deren Herstellung bereitzustellen, in denen in-situ die Modifizierung der Oberflächeneigenschaften durchgeführt wird, wobei die Bulk-Eigenschaften, wie z.B. Statik und Glanz, erhalten bleiben.

Diese Aufgabe wird durch ein Verfahren mit den Merkmalen des Anspruchs 1 gelöst. Anspruch 6 betrifft einen Polymerwerkstoff, Anspruch 10 die Verwendung des Polymerwerkstoffes. Weitere vorteilhafte Ausführungsformen sind in den abhängigen Ansprüchen enthalten. Erfindungsgemäß wird ein Verfahren zur in situ-Funktionalisierung von Polymerwerkstoffen in einer auf einer Additions- oder Kondensationsreaktion basierenden Polymerbildungsreaktion und/oder Vernetzungsreaktion bereitgestellt, bei dem mindestens ein Polymerbildner ausgewählt ist aus der Gruppe bestehend aus Lactamen, Diaminen, Dicarbonsäuren, Dicarbonsäurechloriden, Vinylalkoholen, Diolen, Diestern, Diisocyanate, Diarylcarbonate, Imide, Epoxide, Diepoxide, Dicarbonsäureanhydride und aus diesen Monomeren aufgebaute Oligomere oder Polymere mit mindestens einem Modifikator ausgewählt aus der Gruppe bestehend aus Alkoholen (C₁-C₂₀), fluorierten Alkoholen (C₁-C₂₀), Säuren (C₁-C₂₀), fluorierten Säuren (C₁-C₂₀) , Säureanhydriden (C₁-C₂₀), fluorierten Säureanhydriden (C₁-C₂₀), primären Aminen (C₁-C₂₀) , fluorierten primären Aminen (C₁-C₂₀) , sekundären Aminen (C₁-C₂₀) , fluorierten sekundären Aminen (C₁-C₂₀) , tertiären Aminen (C₁-C₂₀) , fluorierten tertiären Aminen (C₁-C₂₀) , Isocyanaten (C₁-C₂₀) , fluorierten Isocyanaten (C₁-C₂₀) , Thioisocyanaten (C₁-C₂₀) ,fluorierten Thioisocyanaten (C₁-C₂₀) , Carbonylen (C₁-C₂₀) , fluorierten Carbonylen (C₁-C₂₀) , substituierten Arylen, fluorierten substituierten Arylen, unsubstituierten Arylen, fluorierten unsubstituierten Arylen, Epoxiden, mehrfach funktionellen Verbindungen, insbesondere Glykolen, Polyolen, Sacchariden, Oligosacchariden, Polysacchariden, Diaminen, Polyaminen, gemischt funktionelle Verbindungen und/oder Mischungen hiervon umgesetzt werden, wobei Polymerbildner und Modifikator in miteinander nicht-mischbaren Phasen vorliegen, so dass an der Grenzfläche der Phasen eine im Wesentlichen endständige kovalente Anbindung des mindestens einen Modifikators an den mindestens einen Polymerbildner erfolgt, wodurch sich der mindestens eine Modifikator im Wesentlichen an der Oberfläche des Polymerwerkstoffs anlagert.

Durch dieses Verfahren wird ermöglicht, dass die Anbindung der Komponente gerichtet an der Phasengrenze bzw. an der Oberfläche erfolgt. Erfindungsgemäß können sich folglich die modifizierten Polymerbereiche im Wesentlichen an der Oberfläche des Polymers anreichern.

In einer bevorzugten Variante des Verfahrens ist der Polymerbildner vorab modifiziert worden und wird der derart modifizierte Polymerbildner mit unmodifizierten Polymerbildnern umgesetzt, wobei beide in miteinander nicht mischbaren Phasen vorliegen, so dass an der Grenzfläche der Phasen eine Anbindung des vorab modifizierten Polymerbildners an den unmodifizierten Polymerbildner erfolgt.

So wird eine kovalente Anbindung an funktionelle Gruppen des Polymers ermöglicht, bei der die Oberflächenmodifizierung während des Herstellungsprozesses und nicht durch eine aufwändige Plasma-Oberflächenbehandlung erfolgt.

Bevorzugt wird der Modifikator oder der modifizierte Polymerbildner zu Beginn, während und/oder unmittelbar vor Abschluss der Polymerbildungsreaktion und/oder Vernetzungsreaktion zugesetzt. Derart wird eine vollständige Umsetzung des Modifikators bzw. des modifizierten Polymerbildners gewährleistet.

In einer vorteilhaften Ausführungsform erfolgt die auf einer Additions- oder Kondensationsreaktion basierende Polymerbildungsreaktion und/oder Vernetzungsreaktion aufgrund einer Initiierung. Diese Initiierung kann thermisch, photochemisch, katalytisch, oxidativ und/oder radikalisch erfolgen.

Erfindungsgemäß kann also mindestens ein Prepolymer (Polymer Precursor) mit mindestens einem modifizierten Prepolymer umgesetzt werden, wobei sich das modifizierte Prepolymer an der Oberfläche bzw. Grenzfläche anreichert und im Anschluss eine Vernetzung zwischen Prepoymer und modifiziertem Prepolymer erfolgt.

Alternativ ist auch eine Umsetzung von mindestens einem Prepolymer 1, mindestens einem Prepolymer 2 und mindestens einem Modifikator möglich, wobei der Modifikator erst mit dem Prepolymer 1 reagiert und im Anschluss eine Anreicherung des modifizierten Prepolymers 1 an der Oberfläche bzw. Grenzfläche oder Phasengrenze erfolgt. Schließlich erfolgt eine Vernetzung von modifiziertem Prepolymer 1 mit Prepolymer 2.

Unter Prepolymer werden erfindungsgemäß Komponenten verstanden, die Vorstufen von Polymeren darstellen. Hierzu gehören Polymer Precursor wie Monomere oder Monomer-Systeme, die gegebenenfalls im Vorfeld zu einer mittellangen Polymerkette bestehend aus 2 bis 1000 Monomereinheiten weiter reagiert haben. Dieses Material ist zu weiterer Vernetzung durch Polymerisation zu einem vollständig ausgebildeten Polymer mit den erfindungsgemäßen Eigenschaften in der Lage.

Es ist auch möglich, dass mindesten ein Monomer 1, mindestens ein Monomer 2 und mindestens ein Modifikator vorliegen, wobei zuerst eine kovalente Anbindung des Modifikators an das Monomer 1 und anschließend eine Anreicherung des modifizierten Monomers 1 an der Ober- bzw. Grenzfläche oder Phasengrenze erfolgt und im Anschluss eine Polymerisation sowie eine Vernetzung durchgeführt wird.

In einer weiteren, bevorzugten Ausführungsform werden mindestens ein Prepolymer und mindestens ein Modifikator eingesetzt. Nach einer Anreicherung des Modifikators an der Ober- bzw. Grenzfläche oder Phasengrenze erfolgt die Reaktion des Modifikators mit dem Prepolymer und schließlich eine Vernetzung.

Weiterhin kann auch mindestens ein Monomer mit mindestens einem Modifikator umgesetzt werden, wobei zuerst eine Anreicherung des Modifikators an der Ober- bzw. Grenzfläche oder Phasengrenze erfolgt und anschließend die Reaktion des Modifikators mit dem Monomer stattfindet. Nach der nachfolgenden Polymerisation erfolgt eine Vernetzung der polymerisierten Komponenten.

Es ist auch denkbar, dass mindestens ein Prepolymer und mindestens ein Modifikator miteinander umgesetzt werden, wobei zuerst eine kovalente Anbindung des Modifikators an das Prepolymer erfolgt und sich im Anschluss das modifizierte Prepolymer an der Ober- bzw. Grenzfläche oder Phasengrenze anreichert. Im Anschluss daran erfolgt eine Vernetzung der modifizierten Prepolymere.

Die Prepolymere sowie die Monomere können erfindungsgemäß den Polymerbildnern zugeordnet werden.

Weiterhin umfasst die Erfindung einen Polymerwerkstoff mit funktionalisierter Oberfläche herstellbar nach dem beschriebenen Verfahren.

Dieser Polymerwerkstoff weist bevorzugt an der Oberfläche eine selbstorganisierte Schicht des Modifikators oder des modifizierten Polymerbildners auf.

Der Polymerwerkstoff ist bevorzugt ausgewählt aus der Gruppe bestehend aus Polycarbonaten, Polyestern, Polyacrylaten, Polyolefinen, Polyurethanen, Polystyrolen, Polyamiden, Polyaramiden, Polyethern, Polysiloxanen und deren Blends, Legierungen, Co- , Graft- und Blockcopolymeren.

Diese Polymerwerkstoffe können vielfältig eingesetzt werden. Aufgrund dieser Werkstoffe kann das Problem der Migration, Diffusion und Permeation von Emissionen durch Kunststoffmaterialien, wie zum Beispiel Rohrleitungen, unterbunden werden.

In einer Ausführungsform weist die funktionalisierte Oberfläche des Polymerwerkstoffs eine Schichtdicke zwischen 0,1 nm und 500 nm, bevorzugt 1 nm bis 50 nm auf. Diese weisen eine einheitliche chemische Bindung und ein charakteristisches Tiefenprofil wie auch eine geordnete Oberflächenstruktur auf.

Weiterhin umfasst die Erfindung die Verwendung des beschriebenen Polymerwerkstoffes zur Funktionalisierung von Substrat-Oberflächen, insbesondere als schmutz- oder wasserabweisende Oberfläche.

Für diese Verwendung besteht das Substrat bevorzugt aus einem organischen oder anorganischen Material, insbesondere Metall, Beton, Glas, Stein, Holz, Polymerwerkstoff, Keramik, Kompositwerkstoff, Gummi und/oder enthält dieses.

Die technischen Anwendungen hierfür sind vielfältig. Zum Beispiel kann so die Vereisung von Flugzeugen verhindert werden. Ferner ermöglichen derartige Oberflächen eine schmutzabweisende Wirkung von Haushaltsgeräten. Eine Anwendungsmöglichkeit für Kfz- und Schienenfahrzeuge besteht im Innen- und Außenbereich des Fahrzeugbaus wie auch im Schiffsbau. Eine weitere Möglichkeit ist der Einsatz derartig funktionalisierter Polymerwerkstoffe als Sperrschichten zur Verringerung von Materialemissionen (Diffusionssperre, Permeationssperre). Diese Polymerwerkstoffe können in Lacksystemen, auf Gläsern, Glasscheiben, Metalloberflächen und Metallverkleidungen zum Einsatz kommen. Weitere Verwendungsmöglichkeiten sind Küchenarbeitsplatten, Kühlschränke, Spiegel, Möbel und Sichtbeton. Auch Gebäudefassaden und Innenraumoberflächen können mit diesen Polymerwerkstoffen beschichtet werden. Eine weitere Einsatzmöglichkeit besteht im Bereich der Laborgeräte und Labormaterialien (z.B. Austauscherharze). Ferner können diese Polymerwerkstoffe für Scheinwerfer, Windschutzscheiben, Lichtkuppeln, Schiefertafeln an Gebäuden und auch allgemein an Gebäudefassaden genutzt werden.

Anhand der folgenden Figuren soll der anmeldungsgemäße Gegenstand näher erläutert werden, ohne diesen auf diese speziellen Varianten einzuschränken.

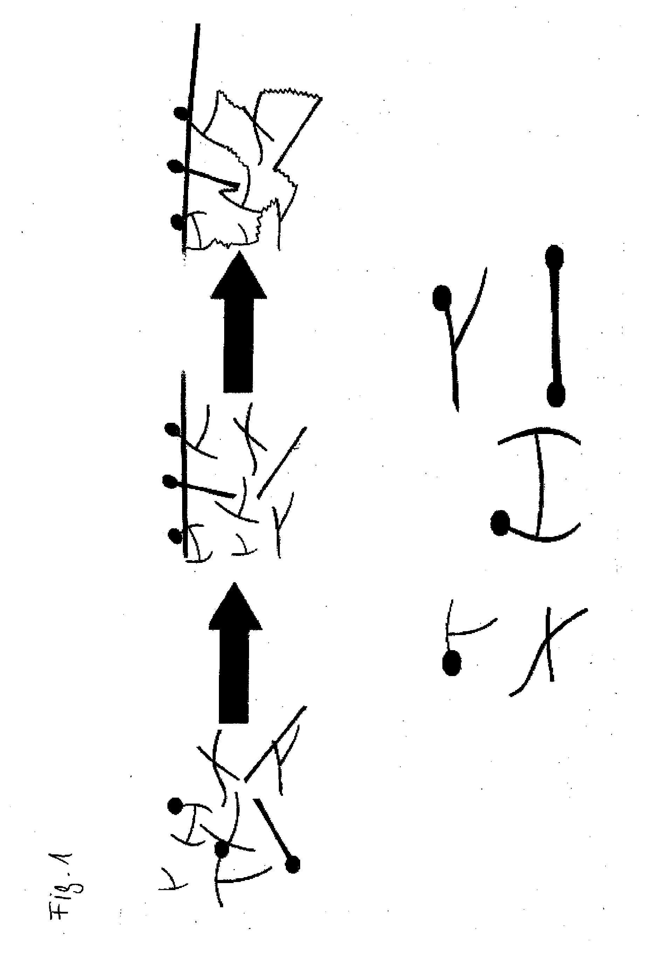

Figur 1A zeigt einen möglichen, schematischen Ablauf einer erfindungsgemäßen Reaktion.
Figur 1B zeigt mögliche Reaktionspartner für eine erfindungsgemäße Reaktion.

In Figur 1A ist schematisch dargestellt, wie die erfindungsgemäße Reaktion ablaufen kann. In einem ersten Schritt erfolgt eine Selbstorganisation der modifizierten Polymerbildner 2 an der Ober- bzw. Grenzfläche oder Phasengrenze, wohingegen die unmodifizierten Polymerbildners 1 verteilt vorliegen. Daraufhin erfolgt eine Vernetzung 4 der unmodifizierten Polymerbildner 1 und der modifizierten Polymerbildner 2.

Figur 1B zeigt mehrere Varianten für die unmodifizierten Polymerbildner 1 sowie die modifizierten Polymerbildner 2.

## Patentansprüche

1. Verfahren zur in situ-Funktionalisierung von Polymerwerkstoffen in einer auf einer Additions-oder Kondensationsreaktion basierenden Polymerbildungsreaktion und/oder Vernetzungsreaktion bei dem
mindestens ein Polymerbildner ausgewählt ist aus der Gruppe bestehend aus Lactamen, Diaminen, Dicarbonsäuren, Dicarbonsäurechloriden, Vinylalkoholen, Diolen, Diestern, Diisocyanate, Diarylcarbonate, Imide, Epoxide, Diepoxide, Dicarbonsäureanhydride und aus diesen Monomeren aufgebaute Oligomere oder Polymere mit mindestens einem Modifikator ausgewählt aus der Gruppe bestehend aus Alkoholen (C₁-C₂₀) , fluorierten Alkoholen (C₁-C₂₀) , Säuren (C₁-C₂₀) fluorierten Säuren (C₁-C₂₀) , Säureanhydriden (C₁-C₂₀), fluorierten Säureanhydriden (C₁-C₂₀), primären Aminen (C₁-C₂₀), fluorierten primären Aminen (C₁-C₂₀), sekundären Aminen (C₁-C₂₀), fluorierten sekundären Aminen (C₁-C₂₀), tertiären Aminen (C₁-C₂₀), fluorierten tertiären Aminen (C₁-C₂₀), Isocyanaten (C₁-C₂₀), fluorierten Isocyanaten (C₁-C₂₀), Thioisocyanaten (C₁-C₂₀) , fluorierten Thioisocyanaten (C₁-C₂₀) , Carbonylen (C₁-C₂₀), fluorierten Carbonylen (C₁-C₂₀), substituierten Arylen, fluorierten substituierten Arylen, unsubstituierten Arylen, fluorierten unsubstituierten Arylen, Epoxiden, mehrfach funktionellen Verbindungen, insbesondere Glykolen, Polyolen, Sacchariden, oligosacchariden, Polysacchariden, Diaminen, Polyaminen, gemischt funktionelle Verbindungen und/oder Mischungen hiervon umgesetzt wird,
wobei Polymerbildner und Modifikator in miteinander nicht-mischbaren Phasen vorliegen, so dass an der Grenzfläche der Phasen eine im wesentlichen endständige kovalente Anbindung des mindestens einen Modifikators an den mindestens einen Polymerbildner erfolgt,
wodurch sich der mindestens eine Modifikator im Wesentlichen an der Oberfläche des Polymerwerkstoffs anlagert.

2. Verfahren nach Anspruch 1,
**dadurch gekennzeichnet, dass** der Polymerbildner vorab modifiziert worden ist und der derart modifizierte Polymerbildner mit unmodifizierten Polymerbildnern umgesetzt wird,
wobei beide in miteinander nicht mischbaren Phasen vorliegen, so dass an der Grenzfläche der Phasen eine Anbindung des vorab modifizierten Polymerbildners an den unmodifizierten Polymerbildner erfolgt.

3. Verfahren nach einem der vorhergehenden Ansprüche,
**dadurch gekennzeichnet, dass** der Modifikator oder der modifizierte Polymerbildner zu Beginn, während und/oder unmittelbar vor Abschluss der Polymerbildungsreaktion und/oder Vernetzungsreaktion zugesetzt wird.

4. Verfahren nach einem der vorhergehenden Ansprüche,
**dadurch gekennzeichnet, dass** die auf einer Additions- oder Kondensationsreaktion basierende Polymerbildungsreaktion und/oder Vernetzungsreaktion aufgrund einer Initiierung erfolgt.

5. Verfahren nach Anspruch 4,
**dadurch gekennzeichnet, dass** die Initiierung thermisch, photochemisch, katalytisch, oxidativ und/oder radikalisch erfolgt.

6. Polymerwerkstoff mit funktionalisierter Oberfläche herstellbar nach dem Verfahren nach einem der vorhergehenden Ansprüche.

7. Polymerwerkstoff nach Anspruch 6,
**dadurch gekennzeichnet, dass** der Polymerwerkstoff an der Oberfläche eine selbstorganisierte Schicht des Modifikators oder des modifizierten Polymerbildners aufweist.

8. Polymerwerkstoff nach einem der Ansprüche 6 oder 7,
**dadurch gekennzeichnet, dass** der Polymerwerkstoff ausgewählt ist aus der Gruppe bestehend aus Polycarbonaten, Polyestern, Polyacrylaten, Polyolefinen, Polyurethanen, Polystyrolen, Polyamiden, Polyaramiden, Polyethern, Polysiloxanen und deren Blends, Legierungen, Co- , Graft- und Blockcopolymeren.

9. Polymerwerkstoff nach einem der Ansprüche 6 bis 8,
**dadurch gekennzeichnet, dass** die funktionalisierte Oberfläche eine Schichtdicke zwischen 0,1 nm und 500 nm, bevorzugt 1 nm bis 50 nm aufweist.

10. Verwendung des Polymerwerkstoffs nach einem der vorhergehenden Ansprüchen 6 bis 9 zur Funktionalisierung von Oberflächen von Substraten, insbesondere als schmutz- oder wasserabweisende Oberfläche.

11. Verwendung des Polymerwerkstoffs nach Anspruch 10, **dadurch gekennzeichnet, dass** das Substrat aus einem organischen oder anorganischen Material, insbesondere Metall, Beton, Glas, Stein, Holz, Polymerwerkstoff, Keramik, Kompositwerkstoff, Gummi besteht und/oder dieses enthält.
